# FASCICULE DE BREVET EUROPEEN

(11) **EP 1 774 673 B1**
(45) Date de publication et mention de la délivrance du brevet: **03.11.2010**
(21) Numéro de dépôt: 04767784.4
(22) Date de dépôt: 27.07.2004
(51) Int. Cl.: H04B 7/00

(54) **EMETTEUR RECEPTEUR A AUTO APPRENTISSAGE**
SELBSTLERNENDER SENDER/EMPFÄNGER
SELF-LEARNING TRANSCEIVER

(43) Date de publication de la demande: 18.04.2007
(73) Titulaire: Johnson Controls Technology Company, Holland, MI 49423 (US)
(72) Inventeur: NIGON, Frédéric, F-78510 Triel Sur Seine (FR)
(74) Mandataire: Bloch, Gérard
(86) Numéro de dépôt international: PCT/FR2004/002002
(87) Numéro de publication internationale: WO 2006/021627

(56) Documents cités:
- EP-A- 0 401 192
- WO-A-99/66587
- US-A- 5 396 647
- US-A- 5 857 155
- US-A1- 2002 142 783
- M.Mouly, M. Pautet: "The GSM system for mobile communications" 1992, Cell & Sys. , Palaiseau ISBN: 2-9507190-0-7 , pages 434-458

## Description

L'invention concerne le domaine des émetteurs-récepteurs soumis à des réglementations ou des spécifications de télécommunication déterminées selon les pays ou zones géographiques où ils sont utilisés.

Dans chaque pays, par exemple, les émissions et/ou réceptions radioélectriques des appareils de télécommunication sont limitées à des bandes de fréquences dépendant de leur type, et ces bandes de fréquences ne sont généralement pas les mêmes d'un pays à l'autre.

Il en est ainsi concernant les transmissions des télécommandes d'appareils électroniques domestiques ou assimilés, la domotique et l'électronique automobile.

De même les spécifications des protocoles d'échanges de données radio peuvent varier d'un pays à l'autre.

Ainsi, à la suite d'un déménagement ou d'un déplacement automobile hors d'une zone géographique de réglementation radioélectrique A vers une zone géographique de réglementation radioélectrique B, ces appareils d'usage privatif prévus pour la réglementation A peuvent rester utilisables dans l'environnement B, à condition que les spécifications ou protocoles d'échanges soient compatibles, mais ils le sont alors de façon illicite. En cas d'incompatibilité, le brouillage entraîné par leur utilisation peut perturber l'environnement radioélectrique, voire se révéler dangereux. C'est notamment le cas des dispositifs de télécommande de portails d'entrées de domiciles ou de garages intégrés dans les appareillages électroniques de certains véhicules automobiles.

Actuellement, il est de la responsabilité des utilisateurs concernés de faire changer les bandes de fréquences ou les protocoles de ces dispositifs de télécommande (et des appareils télécommandés) et de se mettre en conformité à la réglementation en vigueur. Mais les contrôles sont difficilement réalisables.

Par ailleurs, l'Union européenne envisage la mise en place de systèmes de télé-péages d'autoroutes ou autres zones urbaines d'utilisation compatibles dans les différents pays européens. Ces systèmes visent notamment à rendre inutiles les infrastructures au sol, coûteuses, en faisant appel à des moyens de liaisons radio et de localisation par satellites. Mais ces moyens importants ne sont envisagés que pour cette application particulière et ne seront d'ailleurs mis en oeuvre que progressivement et sur une très longue durée.

Il existe donc actuellement un besoin d'adapter des émetteurs-récepteurs aux réglementations et/ou aux spécifications ou protocoles locaux de tous les pays dans lesquels ils sont susceptibles d'être utilisés.

La demanderesse a cherché à répondre à ce besoin.

A cet effet, l'invention concerne un émetteur- récepteur selon la revendication 1.

L'utilisateur de l'émetteur-récepteur peut contrôler qu'il utilise une bande de fréquence permise et adapter son émetteur-récepteur si nécessaire. Il peut agir de même s'il s'agit d'une inadaptation de ce dernier aux spécifications d'échanges de la zone géographique d'utilisation.

En outre, le code permet d'extraire les bandes de fréquences permises dans la mémoire et de contrôler que la bande de fréquence en cours d'utilisation figure parmi les bandes permises. Si ça n'est pas le cas, l'utilisateur est averti et peut se mettre en conformité avec la réglementation en vigueur dans la zone d'utilisation.

On connait, par ailleurs, par le document US-5857155, un émetteur-récepteur pour système de communication utilisant des données de positionnement par satellites GPS pour contrôler certains paramètres de communication (puissance, correction d'erreurs, décision de retransmission, ...). Cependant, un tel émetteur-récepteur ne permet pas, dans le cas où le canal de communication n'est pas établi, de rétablir le canal compte tenu de la zone géographique dans laquelle se trouve ledit émetteur-récepteur ; aucun processus d'apprentissage pour adapter les caractéristiques de fonctionnement de l'émetteur-récepteur, liées aux réglementations et/ou aux spécifications d'une zone géographique, à d'autres réglementations et/ou spécifications d'autres zones géographique, n'étant mis en oeuvre.

De préférence, les moyens d'identification comportent des moyens de localisation de la zone géographique de son lieu d'utilisation.

Avantageusement, les signaux radio de signalisation sont délivrés par des bornes de délimitation de zone. Ces bornes peuvent par exemple être des bornes de télé-péage.

Selon une caractéristique intéressante de l'invention, les moyens de traitement sont agencés pour télécharger des données caractéristiques de la localisation et/ou des réglementations et/ou des spécifications et les mémoriser dans une mémoire prévue à cet effet.

De préférence encore, les données caractéristiques des réglementations et/ou des spécifications sont des données de bandes de fréquences permises et éventuellement des protocoles de communication utilisés dans les zones géographiques et les moyens de contrôle commandent le module d'apprentissage de la bande de fréquence utilisée par l'émetteur.

L'utilisateur n'a ainsi aucun souci de mise à jour de fréquences ou de protocoles.

Avantageusement, les moyens d'identification de la zone géographique d'utilisation sont agencés pour recevoir le code à partir d'un clavier.

En cas de panne des moyens de traitement, l'émetteur-récepteur n'est pas bloqué.

Avantageusement également, une mémoire contient des données de description des frontières desdites zones géographiques déterminées et les moyens de localisation de la zone géographique d'utilisation sont agencés pour collecter des informations délivrées par un système de positionnement global, par exemple GPS (pour Global Positionning System ou Système de Positionnement par Satellite) ou un système de navigation, pour les comparer aux données de description des frontières desdites zones et pour ainsi déterminer la zone d'utilisation.

Dans les deux cas, aucune intervention de l'utilisateur n'est nécessaire lors d'un changement de zone, l'émetteur-récepteur adaptant automatiquement sa bande de fréquence et son protocole à la réglementation de la zone B.

Une caractéristique concernant les données de description des frontières est qu'elles déterminent des segments rectilignes joignant des points successifs desdites frontières, lesquels points sont choisis en fonction des caractéristiques géographiques des régions sur lesquelles elles sont situées.

Si par exemple l'émetteur-récepteur n'est pas utilisable en montagne ou sur mer, les frontières desdites zones peuvent être arbitrairement déterminées par des segments quelconques choisis sur les surfaces de ces montagnes ou de ces mers, ce qui permet d'en simplifier la description.

L'émetteur-récepteur de l'invention est ainsi bien adapté pour être intégré à un dispositif de télécommande embarqué dans un véhicule automobile.

L'invention sera mieux comprise à l'aide de la description suivante d'une forme préférée de réalisation de l'émetteur-récepteur selon l'invention en référence au dessin l'accompagnant, sur lequel :
- la figure 1 représente un schéma par blocs fonctionnels d'une première forme de réalisation de l'émetteur-récepteur selon l'invention ;
- la figure 2 est un schéma représentant une frontière de zone géographique avec sa description par des segments rectilignes.
- la figure 3 est un organigramme fonctionnel du fonctionnement général de l'émetteur-récepteur selon l'invention ; et
- la figure 4 est un organigramme fonctionnel du fonctionnement en mode d'apprentissage de l'émetteur-récepteur selon l'invention.

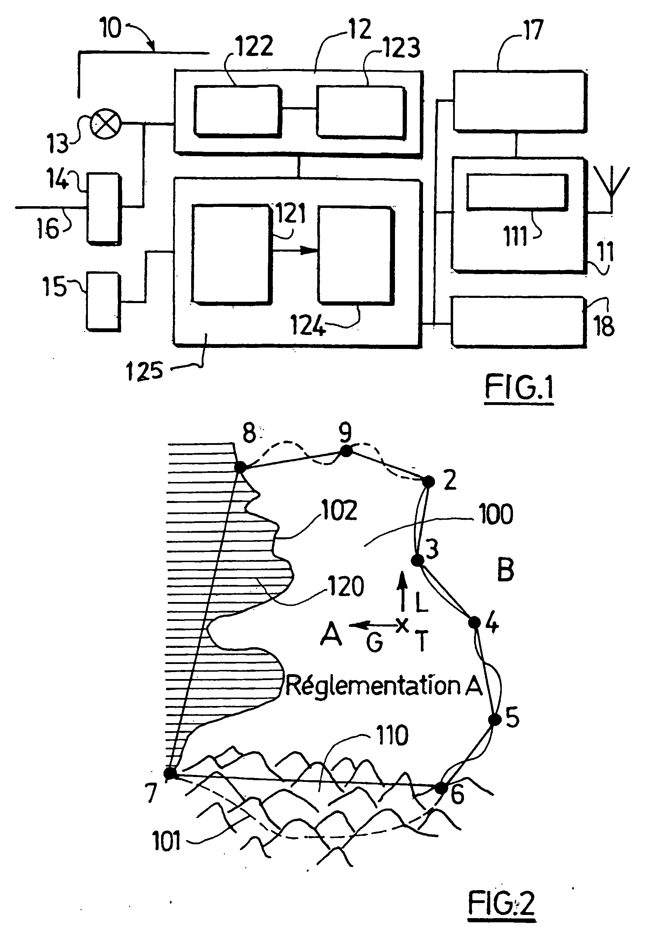

En référence à la figure 1, un émetteur-récepteur 10 comporte un module radio 11, avec au moins un module d'émission réception 111 relié à un microprocesseur 12 intégrant des fonctions ordinaires de supervision et aussi, par exemple, de télécommande, non représentées, et au moins un module 123 d'apprentissage des bandes de fréquences ou des protocoles d'échanges utilisés par le module radio 11, une interface utilisateur composée d'un clavier 15 comportant des boutons d'activation des fonctions du microprocesseur ou d'introduction de données, éventuellement des micro-contacts permettant d'afficher des codes, de voyants LED ou d'écran de visualisation 13 et, lorsque l'émetteur-récepteur est intégré à un système électronique externe, par exemple un calculateur d'habitacle automobile, une interface 14 reliée à un bus de communication 16.

Une mémoire 18 pouvant servir de mémoire tampon mais aussi de stockage de données est reliée au microprocesseur et à des moyens 125 d'identification de zone comportant des moyens de localisation 121 et/ou des moyens de traitement 124 de signaux radio.

Le microprocesseur 12 comporte en outre des moyens de contrôle 122 de la bande de fréquence utilisée par le module radio 11 et reliés à la mémoire 18.

L'ensemble comporte enfin un module d'alimentation électrique 17 pour alimenter le microprocesseur et le module radio.

La mémoire 18 contient notamment des données de bandes de fréquences permises dans des zones géographiques déterminées. Ces données y sont triées par codes C de zones ou de payes. L'utilisateur peut introduire ledit code C grâce au clavier 15 relié aux moyens d'identification 125, lesquels fournissent ledit code aux moyens de contrôle 122. Mais le code C peut aussi provenir d'un système externe par le canal du bus de communication 16 et de l'interface 14 ou par le module radio 11.

Selon une forme de réalisation préférée, en référence à la figure 2, la mémoire 18 comporte aussi des données de description de frontières 1 de zones 100 géographiques déterminées.

Ces données de description sont constituées de jeux de coordonnées géographiques, par exemple les longitudes G et latitudes L, de points 2, 3, ..., 9 choisis préalablement sur la frontière 1 des zones géographiques 100 dans lesquelles les émetteurs récepteurs peuvent être utilisés, et pour chacune desquelles la réglementation A est unique, mais différente de celle B des zones voisines. A chaque jeu de coordonnées correspond un code de zone géographique différent.

Les points sont choisis suffisamment proches les uns des autres de sorte que les segments rectilignes joignant deux points successifs ne s'écartent pas trop de la frontière 1 au point de permettre une utilisation illicite du transmetteur qui ne serait pas détectable. Si la frontière 1 se situe dans une région montagneuse 110 telle que sa partie 101 ou dans une région maritime 120 telle que sa partie 102, les points successifs 6 et 7 ou 7 et 8 peuvent être très éloignés dans la mesure ou l'utilisation de l'émetteur-récepteur dans les régions 110 ou 120 n'est pas possible.

Dans cette forme de réalisation, les moyens de localisation 121 calculent le code pays C à partir de deux sortes de données :
1- des coordonnées géographiques de l'émetteur-récepteur, longitude et latitude, collectées à partir d'un système de navigation externe ou d'un GPS près de l'émetteur-récepteur par le canal du bus de communication 16 et de l'interface 14 ou directement saisis par l'utilisateur de l'émetteur-récepteur grâce aux boutons du clavier 15, et
2- des données de description de frontières 1 des zones 100 géographiques déterminées incluses dans la mémoire 18.

Ces données sont alors préenregistrées dans la mémoire 18 ici prévue non volatile.

On peut aussi prévoir que les moyens de localisation 121 comportent un GPS ou autre système de positionnement global.

Selon une forme de réalisation intéressante incluant une fonction de téléchargement incluse dans les moyens de traitement 124, le module radio 11 et les moyens d'identification 125 par ses moyens de traitement 124 des signaux radio permettent de télécharger lesdites données, c'est-à-dire les bandes de fréquences permises et les protocoles spécifiés de la zone abordée B, dans la mémoire 18, au moment du passage à proximité des bornes de délimitation de zones (non représentées). Ces bornes peuvent par exemple être des bornes de télé-péage.

Ainsi, quelle que soit la forme de réalisation choisie, les moyens de contrôle 122 peuvent ainsi extraire de la mémoire 18, pour un code C donné, les bandes de fréquences permises par la réglementation dans la zone A ou B ou dans le pays d'utilisation, ainsi que les protocoles spécifiés dans ladite zone.

Le fonctionnement de l'émetteur-récepteur va maintenant être décrit dans sa forme de réalisation préférée.

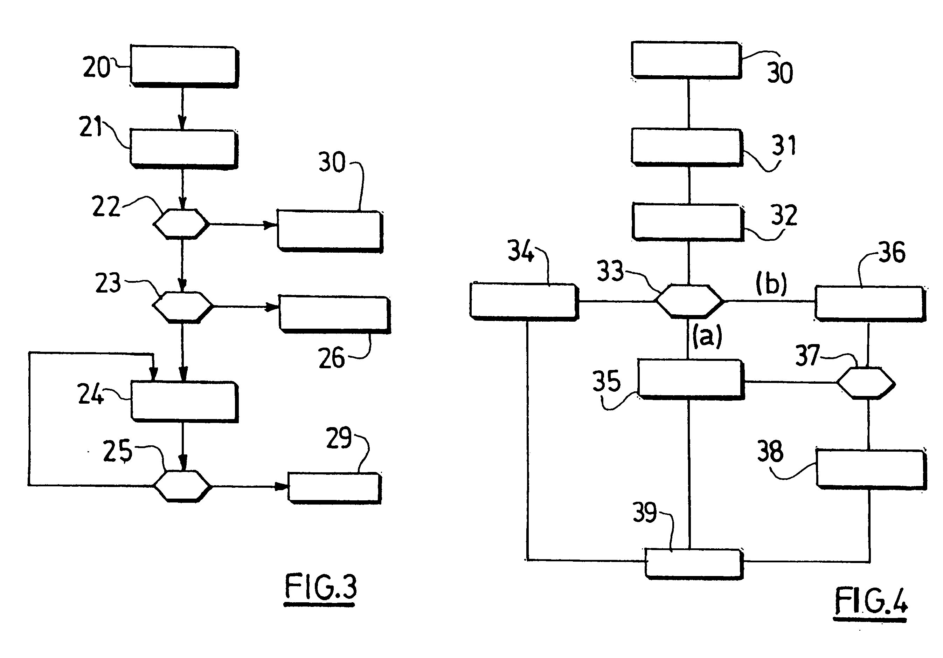

Quand l'utilisateur met en service son émetteur-récepteur, en référence à la figure 3, il lance une étape 20 d'activation du module radio 11, par le microprocesseur 12, d'un canal de communication correspondant à la dernière bande de fréquence utilisée.

En une étape 21 de localisation géographique de l'émetteur-récepteur, les moyens de localisation 121 collectent soit les coordonnées, longitude G et latitude L, de la localisation T de l'émetteur-récepteur, présentes sur le bus 16 et l'interface 14, soit un code C de zone ou de pays affichés grâce aux boutons ou micro - contacts du clavier 15. Alors :
- si les moyens de localisation 121 disposent du code C, le code est transmis aux moyens de contrôle 122 pour un traitement de contrôle expliqué plus loin, et
- si les moyens de localisation 121 disposent des coordonnées L et G de la localisation T de l'émetteur-récepteur, le code C est calculé à partir des données de description des frontières 1 des zones géographiques 100 ou pays conservées dans la mémoire 18.

L'homme du métier connaît des algorithmes permettant de situer un point T relativement à un polygone défini par ses sommets tels que les points 2, 3, ..., 9. Un tel algorithme permet d'identifier dans la mémoire 18 quel jeu de coordonnées de ces points décrit un polygone contenant T, donc dans quelle zone 100, c'est-à-dire à quel code C de pays ou de zone, le point T est situé. Une fois qu'il a été déterminé, le code C est transmis aux moyens de contrôle 122 pour le traitement de contrôle.

En une étape 22, le module radio 11 teste si le canal de communication est établi.

S'il est établi, les moyens de contrôle 122 comparent, en une étape 23, la bande de fréquence et/ou le protocole d'échanges utilisés à l'ensemble des bandes de fréquence permises et/ou des protocoles d'échanges qui sont mémorisés dans la mémoire 18 en regard du code C précédemment calculé ou collecté. Si la bande de fréquence et/ou le protocole utilisé ne figure pas dans cet ensemble, les moyens de contrôle 122 déclenchent une étape 26 d'affichage d'un message « bande interdite » et/ou « protocole incorrect » sur l'écran ou active le voyant 13. Sinon l'étape 24 de transmission peut être effectuée tant que l'activation de l'émetteur récepteur est effective lors de l'étape 25, après quoi l'émetteur récepteur passe à une étape de veille 29.

Si, en référence à la figure 4, le canal de communication n'est pas établi, le microprocesseur 12 lance l'étape 30 pour initialiser la phase d'apprentissage de l'émetteur-récepteur et éventuellement d'un appareil télécommandé, non représenté.

Préalablement à cette phase d'apprentissage, lors d'une étape 31, les moyens de contrôle 122 extraient de la mémoire 18 les données de bandes de fréquence permises et/ou les données de spécifications du protocole en vigueur correspondant au code C et transmettent ces données au module d'apprentissage 123, lequel, lors d'une étape 32, effectue l'apprentissage de l'émetteur-récepteur et éventuellement de l'appareil télécommandé.

En fin d'apprentissage réussi, détecté lors d'une étape 33 effectuée par le microprocesseur 12, l'apprentissage est terminé lors d'une étape 34, et le dispositif de télécommande est mis dans un mode veille lors d'une étape 39.

Si, à l'étape 33, l'apprentissage a échoué, soit, dans une version (a), le microprocesseur signale l'échec par une étape 35 de signalisation, soit, dans une version (b), il tente, par une étape 36 de sélection d'autres bandes non permises, et une étape 37 de test d'apprentissage possible, un autre apprentissage, en secours ou dépannage provisoire de l'utilisateur, par exemple pour un nombre limité d'utilisations, et recherche éventuellement un autre protocole correspondant à la nouvelle bande de fréquence tentée. Quel que soit le résultat, il est signalé, par une étape 35 en cas d'échec et par une étape 38 en cas de succès, avec la mention, cependant, « bande interdite » ou « protocole incorrect ».

Dans la forme de réalisation intéressante incluant une fonction de téléchargement, les opérations d'identification de zone sont les suivantes :
- Lors du passage de l'émetteur-récepteur 10 à proximité d'une borne de délimitation des zones A et B, la borne émet des signaux radio de signalisation sur une fréquence permise de la zone A qui est quittée.
- Le récepteur du module d'émission réception 111 reçoit ces signaux, les démodule et les digitalise, les transmet aux moyens de traitement 124 des moyens d'identification 125.
- Les moyens de traitement 124 traduisent les signaux digitaux soit en données à télécharger dans la mémoire 18, soit en données exploitables par les moyens d'identification 125, auquel cas ils les leur transmettent.
- Les moyens de traitement 124 des signaux radio peuvent ainsi, si les données transmises sont des données à télécharger, télécharger lesdites données directement dans la mémoire 18, notamment les bandes de fréquences permises et les protocoles spécifiés de la zone abordée B, puis dans ce cas déclencher auprès des moyens de contrôle 122 un contrôle des bandes de fréquences permises et de protocoles spécifiés de la zone abordée B, puis enfin une séquence d'apprentissage exécutée par le module d'apprentissage 123 selon le processus expliqué ci-dessus. Mais les données téléchargées peuvent aussi contenir des données de mise à jour de données géographiques ou de logiciels de traitement des protocoles.
- Si les données transmises contiennent un code C de zone, le code est transmis aux moyens d'identification 125, qui déclenchent auprès des moyens de contrôle 122 un contrôle des bandes de fréquences permises et de protocoles spécifiés de la zone abordée B, en extrayant les données de bandes de fréquences permises et de protocoles spécifiés dans la mémoire 18 à partir du code C, puis une séquence d'apprentissage exécutée par le module d'apprentissage 123, comme précédemment.

Cette dernière forme de réalisation peut inclure la localisation géographique ou non, l'identification de la zone géographique étant en quelque sorte assurée en secours par les bornes de délimitation de zones.

## Revendications

1. Emetteur- récepteur (10) utilisé dans une zone géographique A (100) déterminée, comportant un module d'apprentissage (123) pour adapter ses caractéristiques de fonctionnement, liées aux réglementations et/ou aux spécifications de ladite zone géographique A, à d'autres réglementation et/ou spécifications d'autres zones géographique B, **caractérisé par le fait qu'**il comporte des moyens d'identification (125) de la zone géographique B, et des moyens de contrôle (122) desdites caractéristiques en fonction de ladite zone, les moyens d'identification (125) comportant des moyens de traitement (124) de signaux radio de signalisation du changement de sa localisation lorsqu'il est transféré d'une zone A de réglementation et/ou spécifications déterminées à une zone B de réglementation et/ou spécifications différentes et les moyens d'identification (125) étant agencés pour fournir un code C spécifiant ladite zone aux moyens de contrôle (122) et les moyens de contrôle (122) étant agencés pour extraire d'une mémoire (18) des données caractéristiques des réglementations et/ou des spécifications de ladite zone.

2. Emetteur- récepteur selon la revendication 1, dans lequel les moyens d'identification (125) comportent des moyens de localisation (121) de la zone géographique A ou B de son lieu d'utilisation.

3. Emetteur- récepteur selon la revendication 1, dans lequel les signaux radio de signalisation sont délivrés par des bornes de délimitation de zone.

4. Emetteur- récepteur selon la revendication 3, dans lequel les bornes sont des bornes de télépéage.

5. Emetteur- récepteur selon les revendications 1 à 4, dans lequel les moyens de traitement (124) sont agencés pour télécharger des données caractéristiques de la localisation et/ou des réglementations et/ou des spécifications et les mémoriser dans une mémoire (18).

6. Emetteur- récepteur selon l'une des revendications 1 à 5, dans lequel les données caractéristiques des réglementations et/ou des spécifications sont des données de bandes de fréquences permises et éventuellement des protocoles de communication utilisés dans les zones géographiques (100).

7. Emetteur- récepteur selon l'une des revendications 1 à 6, dans lequel les moyens de contrôle (122) commandent le module d'apprentissage (123) de la bande de fréquence utilisée par l'émetteur.

8. Emetteur- récepteur selon la revendication 1, dans lequel les moyens d'identification (125) de la zone géographique d'utilisation sont agencés pour recevoir le code C à partir d'un clavier (15).

9. Emetteur- récepteur selon l'une des revendications 2 ou 8, dans lequel une mémoire (18) contient des données (2, ..., 9) de description des frontières (1) desdites zones géographiques (100) déterminées et dans lequel les moyens de localisation (121) de la zone géographique d'utilisation sont agencés pour collecter des informations délivrées (16) par un système de positionnement global ou un système de navigation, pour les comparer aux données de description des frontières desdites zones et pour ainsi déterminer la zone d'utilisation.

10. Emetteur- récepteur selon la revendication 9, dans lequel les données de description des frontières déterminent des segments rectilignes joignant des points successifs (2, 3, ..., 9) desdites frontières.

11. Emetteur- récepteur selon la revendication 10, dans lequel les points successifs sont choisis sur les frontières en fonction des caractéristiques géographiques des régions sur lesquelles elles sont situées.

12. Emetteur- récepteur selon l'une des revendications 9 à 11, dans lequel la mémoire (18) est une mémoire non volatile.

13. Emetteur récepteur selon l'une des revendications 9 à 12, **caractérisé par le fait qu'**il est intégré à un dispositif de télécommande.

14. Emetteur- récepteur selon l'un des revendications 9 à 13, **caractérisé par le fait qu'**il est embarqué dans un véhicule automobile.

15. Emetteur- récepteur selon l'une des revendications 9 à 14, dans lequel les moyens de localisation (121) comportent un moyen de positionnement global.

16. Emetteur- récepteur selon l'une des revendications 1 à 15, dans lequel les moyens de contrôle (122) sont agencés pour commander un voyant (13) qui indique si la bande de fréquence utilisée est permise ou que les spécifications ou protocoles d'échanges sont corrects.

## Claims

1. Transceiver (10) used in a given geographical area A (100), comprising a learning module (123) for adapting its operating characteristics, related to the regulations and/or specifications of said geographical area A, to other regulations and/or specifications of other geographical areas B, **characterised by** the fact that it comprises means (125) of identifying the geographical area B, and means (122) of controlling said characteristics according to said area, the identification means (125) comprising means (124) of processing radio signals signalling the change in its location when it is transferred from an area A of given regulations and/or specifications to an area B with different regulations and/or specifications and the identification means (125) being arranged to supply a code C specifying said area to the control means (122) and the control means (122) being arranged to extract from a memory (18) data characteristic of the regulations and/or specifications of said area.

2. Transceiver according to claim 1, wherein the identification means (125) comprise means (121) of locating the geographical area A or B of its place of use.

3. Transceiver according to claim 1, wherein the signalling radio signals are delivered by area delimitation terminals.

4. Transceiver according to claim 3, wherein the terminals are remote-payment terminals.

5. Transceiver according to claims 1 to 4, wherein the processing means (124) are arranged to download data characteristic of the location and/or regulations and/or specifications and to store them in a memory (18).

6. Transceiver according to one of claims 1 to 5, wherein the data characteristic of the regulations and/or specifications are permitted frequency band data and optionally communication protocol used in the geographical areas (100).

7. Transceiver according to one of claims 1 to 7, wherein the control means (122) control the module (123) learning the frequency band used by the transmitter.

8. Transceiver according to claim 1, wherein the means (125) of identifying the geographical area of use are arranged to receive the code C from a keypad (15).

9. Transceiver according to one of claims 2 or 8, wherein a memory (18) contains data (2, ..., 9) describing the boundaries (1) of said given geographical areas (100) and wherein the means (121) of locating the geographical area of use are arranged to collect information (16) delivered by a global positioning system or a navigation system, in order to compare them with the data describing the boundaries of said areas and in order thus to determine the area of use.

10. Transceiver according to claim 9, wherein the data describing the boundaries determine rectilinear segments joining successive points (2, 3, ..., 9) of said boundaries.

11. Transceiver according to claim 10, wherein the successive points are chosen on the boundaries according to the geographical characteristics of the regions on which they are situated.

12. Transceiver according to one of claims 9 to 11, wherein the memory (18) is a non-volatile memory.

13. Transceiver according to one of claims 9 to 12, **characterised by** the fact that it is integrated in a remote-control device.

14. Transceiver according to one of claims 9 to 13, **characterised by** the fact that it is installed in a motor vehicle.

15. Transceiver according to one of claims 9 to 14, wherein the location means (121) comprise a global positioning means.

16. Transceiver according to one of claims 1 to 15, wherein the control means (122) are arranged to control an indicator light (13) that indicates whether the frequency band used is permitted or whether the specifications or exchange protocols are correct.

## Patentansprüche

1. Sende-/Emfangseinrichtung (10), verwendet in einer besonderen geographischen Zone A (100), umfassend ein Lernmodul (123), um ihre Betriebseigenschaften, die mit den Bestimmungen und/oder mit den Spezifikationen der geografischen Zone A verbunden sind, an andere Bestimmungen und/oder Spezifikationen anderer geographischer Zonen B anzupassen, **dadurch gekennzeichnet, dass** sie Mittel zur Identifizierung (125) der geographischen Zone B umfasst sowie Mittel zur Kontrolle (122) der Eigenschaften je nach der Zone, wobei die Mittel zur Identifizierung (125) Mittel zur Verarbeitung (124) der Funksignale zur Signalisierung der Veränderung ihrer Lokalisierung umfassen, wenn sie von einer Zone A mit besonderen Bestimmungen und/oder Spezifikationen in eine Zone B mit verschiedenen Bestimmungen und/oder Spezifikationen übertragen wird, und wobei die Mittel zur Identifizierung (125) angeordnet sind, um einen Code C, der die Zone spezifiziert, an die Mittel zur Kontrolle (122) zu liefern, und wobei die Mittel zur Kontrolle (122) angeordnet sind, um von einem Speicher (18) charakteristische Daten der Bestimmungen und/oder Spezifikationen der Zone abzurufen.

2. Sende-/Empfangseinrichtung nach Anspruch 1, wobei die Mittel zur Identifizierung (125) Mittel zur Lokalisierung (121) der geographischen Zone A oder B seines Anwendungsorts umfassen.

3. Sende-/Empfangseinrichtung nach Anspruch 1, wobei die Radiosignale zur Signalisierung von Begrenzungsmarkierungen der Zone geliefert werden.

4. Sende-/Empfangseinrichtung nach Anspruch 3, wobei die Markierungen Markierungen eines elektronischen Mautsystems sind.

5. Sende-/Empfangseinrichtung nach Anspruch 1 bis 4, wobei die Mittel zur Verarbeitung (124) angebracht sind, um charakteristische Daten der Lokalisierung und/oder Bestimmungen und/oder Spezifikationen herunterzuladen und sie in einem Speicher (18) abzulegen.

6. Sende-/Empfangseinrichtung nach einem der Ansprüche 1 bis 5, wobei die charakteristischen Daten der Bestimmungen und/oder Spezifikationen Daten von zugelassenen Frequenzbändern und eventuell Kommunikationsprotokolle sind, die in den geographischen Zonen (100) verwendet werden.

7. Sende-/Empfangseinrichtung nach einem der Ansprüche 1 bis 6, wobei die Mittel zur Kontrolle (122) das Lernmodul (123) des Frequenzbands, das vom Sender verwendet wird, steuern.

8. Sende-/Empfangseinrichtung nach Anspruch 1, wobei die Mittel zur Identifizierung (125) der geografischen Anwendungszone angebracht sind, um den Code C von einer Tastatur (15) aus zu empfangen.

9. Sende-/Empfangseinrichtung nach einem der Ansprüche 1 oder 8, wobei ein Speicher (18) Daten (2, ..., 9) zur Beschreibung der Grenzen (1) der besonderen geographischen Zonen (100) enthält, und in dem die Mittel zur Lokalisierung (121) der geographischen Verwendungszone angebracht sind, um Informationen (16) zu sammeln, die von einem globalen Positionierungssystem oder einem Navigationssystem geliefert werden, um sie mit den Daten zur Beschreibung der Grenzen der Zonen zu vergleichen und um die Verwendungszone zu bestimmen.

10. Sende-/Empfangseinrichtung nach Anspruch 9, wobei die Daten zur Beschreibung der Grenzen geradlinige Abschnitte bestimmen, die aufeinander folgende Punkte (2, 3, ..., 9) der Grenzen miteinander verbinden.

11. Sende-/Empfangseinrichtung nach Anspruch 10, wobei die aufeinander folgenden Punkte auf den Grenzen je nach den geographischen Eigenschaften der Regionen, auf denen sie sich befinden, ausgewählt werden.

12. Sende-/Empfangseinrichtung nach einem der Ansprüche 9 bis 11, wobei der Speicher (18) ein nichtflüchtiger Speicher ist.

13. Sende-/Empfangseinrichtung nach einem der Ansprüche 9 bis 12, **dadurch gekennzeichnet, dass** sie in eine Fernsteuerungsvorrichtung integriert ist.

14. Sende-/Empfangseinrichtung nach einem der Ansprüche 9 bis 13, **dadurch gekennzeichnet, dass** sie sich an Bord eines Kraftfahrzeugs befindet.

15. Sende-/Empfangseinrichtung nach einem der Ansprüche 9 bis 14, wobei die Mittel zur Lokalisierung (121) ein Mittel zur globalen Positionierung umfassen.

16. Sende-/Empfangseinrichtung nach einem der Ansprüche 1 bis 15, wobei die Mittel zur Kontrolle (122) angeordnet sind, um eine Anzeigelampe (13) zu steuern, die angibt, ob das verwendete Frequenzband zugelassen ist und ob die Spezifikationen oder Austauschprotokolle korrekt sind.
